(19) Europäisches Patentamt
European Patent Office
Office européen des brevets

(11) **EP 2 515 525 A2**

(12) **EUROPEAN PATENT APPLICATION**

(43) Date of publication:
**24.10.2012 Bulletin 2012/43**

(51) Int Cl.:
***H04N 5/232*** *(2006.01)*

(21) Application number: **12164899.2**

(22) Date of filing: **20.04.2012**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br><br>(30) Priority: **21.04.2011 JP 2011094620** | (71) Applicant: **Canon Kabushiki Kaisha**<br>**Tokyo 146-8501 (JP)**<br><br>(72) Inventor: **Nakagawa, Kazuo**<br>**Tokyo, Tokyo 146-8501 (JP)**<br><br>(74) Representative: **TBK**<br>**Bavariaring 4-6**<br>**80336 München (DE)** |

(54) **Image pickup apparatus and control method thereof**

(57) The image pickup apparatus electrically converts an object image to produce an image signal and includes a first detector (8, 20, 26) detecting a first in-focus position by a phase difference detection method, a second detector (21) detecting a second in-focus position by a contrast detection method using the image signal, and a corrector (20) correcting, based on a difference between the first and second in-focus positions, the first in-focus position for image pickup. A controller (20) instructs the optical apparatus to move the focus lens by a predetermined movement amount when the second in-focus position is detected, receives, from the optical apparatus, information on an actual movement amount of the focus lens in response to the instruction, and instructs again the optical apparatus to move the focus lens with change of the predetermined movement amount when a difference between the predetermined and actual movement amounts exceeds a predetermined value.

FIG. 4

EP 2 515 525 A2

**Description**

BACKGROUND OF THE INVENTION

Field of the Invention

The present invention relates to an image pickup apparatus capable of performing focus control by a phase difference detection method, and particularly to an image pickup apparatus having a focus calibration function of correcting an in-focus position obtained by the phase difference detection method, using an in-focus position detected by a contrast detection method.

Description of the Related Art

Lens-interchangeable image pickup apparatuses such as single-lens reflex cameras are often provided with a focus detection system using a phase difference detection method which detects, from a phase difference of paired object images formed by light passing through an image-pickup optical system of the interchangeable lens, a focus state (defocus amount) of the image-pickup optical system. The phase difference detection method involves a problem that influence of a light source, a color or a type of an object and the like makes it impossible to accurately detect an in-focus position.

Japanese Patent Laid-Open No. 2003-295047 discloses a camera capable of solving such a problem, which has a function of performing focus calibration that corrects an in-focus position obtained by the phase difference detection method, using an in-focus position detected by a contrast detection method. The contrast detection method calculates a focus evaluation value showing contrast of an object from a video signal produced by using an image sensor of a digital camera, and decides the in-focus position that is a position of a focus lens where the focus evaluation value becomes maximum. When detecting the focus lens position where the focus evaluation value becomes maximum, the camera disclosed in Japanese Patent Laid-Open No. 2003-295047 monitors change of the focus evaluation value while performing minute drive (step-by-step drive) of the focus lens. This camera corrects, when performing image pickup, the in-focus position obtained by the phase difference detection method by using a correction amount obtained by the focus calibration, and then moves the focus lens to the corrected in-focus position to perform accurate focus control.

Moreover, Japanese Patent Laid-Open No. 2009-139728 discloses a camera that avoids, in a case where an abnormal determination is made in the in-focus position detection by the contrast detection method for the above-mentioned focus calibration, erroneous decision of the correction amount, by means of suspending the focus calibration or the like.

The focus calibration disclosed in Japanese Patent Laid-Open Nos. 2003-295047 and 2009-139728 becomes effective on a condition that, in response to an instruction from the camera for the interchangeable lens to move the focus lens to the corrected in-focus position, the interchangeable lens can accurately move the focus lens to that corrected in-focus position.

However, the interchangeable lens cannot always accurately move the focus lens to the instructed corrected in-focus position due to deterioration in its focus lens driving capability because of long-term use of the interchangeable lens or due to others.

Moreover, in a case where the interchangeable lens cannot move the focus lens by a movement amount as one step in the minute drive, which is demanded to the interchangeable lens from the camera in the in-focus position detection by the contrast detection method, good in-focus position detection, that is, good focus calibration cannot be performed.

SUMMARY OF THE INVENTION

The present invention provides an image pickup apparatus capable of performing good focus calibration for interchangeable lenses (optical apparatuses) in various conditions or of various types and a control method thereof.

The present invention in its first aspect provides an image pickup apparatus as specified in claims 1 to 6.

The present invention in its second aspect provides a control method of an image pickup apparatus as specified in claim 7.

Further features and aspects of the present invention will become apparent from the following description of exemplary embodiments with reference to the attached drawings.

BRIEF DESCRIPTION OF THE DRAWINGS

FIG. 1 is a flowchart showing operations for focus calibration in a digital single-lens reflex camera that is Embodiment 1 of the present invention.

FIG. 2 is a cross-sectional view showing a configuration of the digital single-lens reflex camera of Embodiment 1 in a mirror down state and a configuration of an interchangeable lens attached to the camera.

FIG. 3 is a cross-sectional view showing a configuration of the digital single-lens reflex camera system of Embodiment 1 in a live-view state and the configuration of the interchangeable lens attached to the camera.

FIG. 4 is a block diagram showing an electrical configuration of the digital single-lens reflex camera of Embodiment 1.

FIG. 5 is a flowchart showing fundamental operations of the digital single-lens reflex camera of Embodiment 1.

FIG. 6 is a flowchart showing operations for focus calibration in a digital single-lens reflex camera that is Embodiment 2 of the present invention.

## DESCRIPTION OF THE EMBODIMENTS

Exemplary embodiments of the present invention will hereinafter be described with reference to the accompanying drawings.

[Embodiment 1]

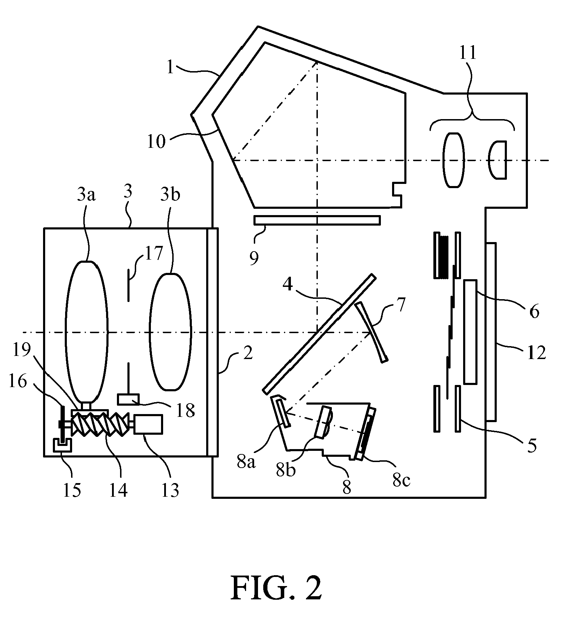

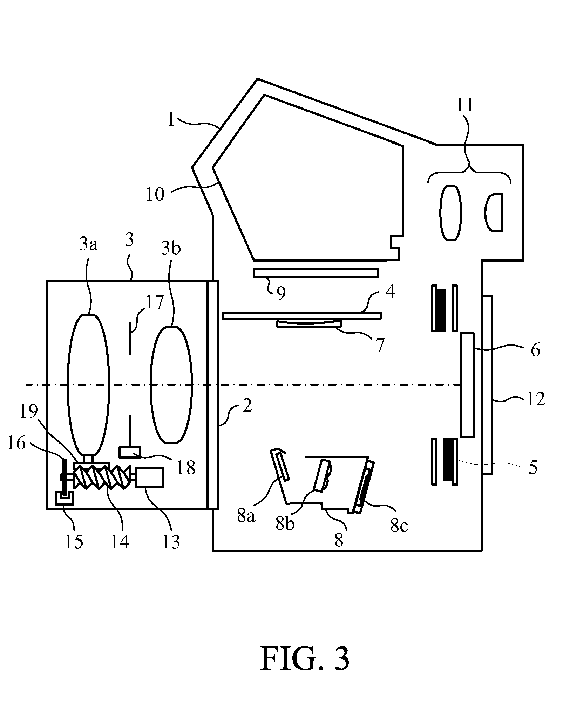

FIGS. 2 and 3 show a configuration of a digital single-lens reflex (SLR) camera system including a digital SLR camera as an image pickup apparatus that is a first embodiment (Embodiment 1) of the present invention and an interchangeable lens as an optical apparatus.

Reference numeral 1 denotes a main body of the digital SLR camera (hereinafter referred to as "a camera body"). Reference numeral 2 denotes a mount fixed to the camera body 1; the interchangeable lens 3 is detachably attached to the mount 2. Moreover, the mount 2 is provided with an interface part (not shown) to communicate various signals with the interchangeable lens 3 and to supply power from the camera body 1 to the interchangeable lens 3.

The interchangeable lens 3 houses thereinside an image-pickup optical system including a focus lens 3a, a magnification varying lens 3b and an aperture stop 17. Although FIGS. 2 and 3 show each lens as if it is constituted by a single lens, each lens may be constituted by plural lenses.

In the camera body 1, reference numeral 4 denotes a main mirror constituted by a half mirror and rotatable between a down position shown in FIG. 2 and an up position shown in FIG. 3. When observation of an object image formed by the image-pickup optical system is made through a viewfinder optical system described later (that is, in a viewfinder observation state), the main mirror 4 is rotated to the down position where the main mirror 4 is obliquely disposed in an image-pickup optical path as shown in FIG. 2. The main mirror 4 disposed at the down position reflects light from the image-pickup optical system to introduce it to the viewfinder optical system.

The viewfinder optical system includes a focusing plate on which the object image is formed by the light reflected by the main mirror 4 and a penta prism 10 that inverts the object image formed on the focusing plate 9. The viewfinder optical system further includes an eyepiece lens 11 that introduces the light from the penta prism 10 to an eye of a uses to cause the user to observe the object image formed on the focusing plate 9. When image pickup and live-view display are performed (that is, in an image pickup/live-view observation state), the main mirror 4 is rotated to the up position where the main mirror 4 is retracted from the image-pickup optical path as shown in FIG. 3, which allows the light from the image-pickup optical system to proceed toward a shutter 5 and an image sensor (image pickup element) 6 which are described later.

The shutter 5 controls exposure of the image sensor 6, the exposure being made by the light from the image-pickup optical system. The shutter 5 in this embodiment is a focal-plane shutter that closes in the viewfinder observation state and opens in the image pickup/live-view observation state.

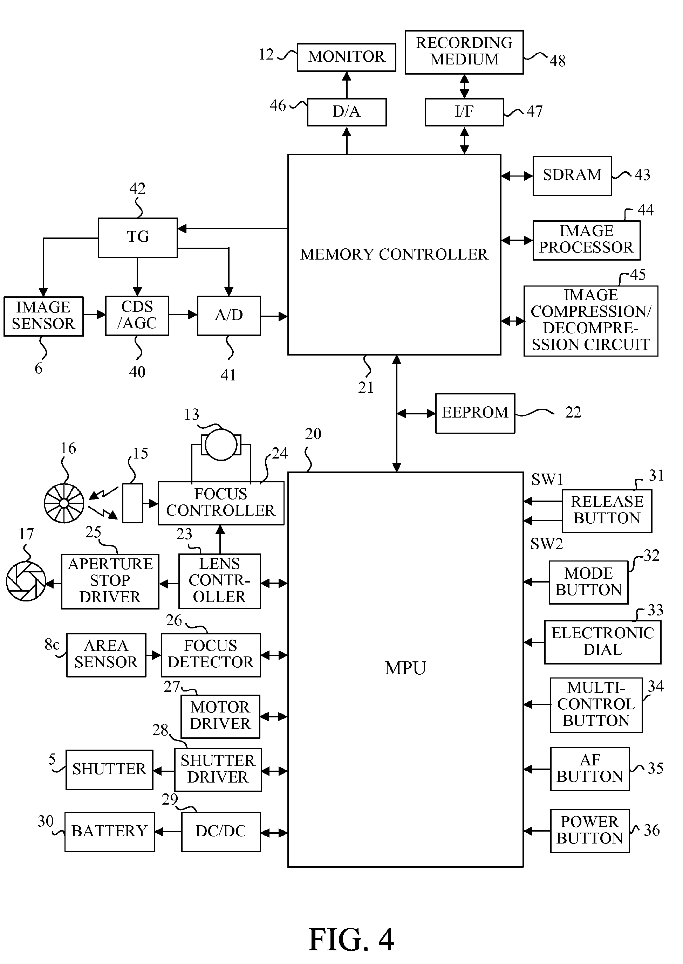

The image sensor 6 is a photoelectric conversion element constituted by a CMOS sensor or a CCD sensor and photoelectrically converts the object image to output an image pickup signal. An image processor 44 (shown in FIG. 4) performs various image processes on the image pickup signal to produce an image signal. The image sensor 6 and the image processor 44 constitute an image pickup device.

Reference numeral 7 denotes a sub mirror rotatable with the main mirror 4. The sub mirror 7 reflects light transmitted through the main mirror 4 located at the down position to introduce it to an AF unit 8 described later and is rotated to the up position with the main mirror 4 in the image pickup/live-view observation state.

The AF unit 8 is constituted by a reflective mirror 8a, a secondary image-forming lens 8b and an area sensor 8c including plural light-receiving elements two-dimensionally arranged. The secondary image-forming lens 8b causes light entering thereinto from the image-pickup optical system and reflected by the main mirror 4, the sub mirror 7 and the reflective mirror 8a to form paired object images.

The area sensor 8c photoelectrically converts the paired object images to produce paired image signals. These paired image signals are output to a focus detection circuit 26 shown in FIG. 4 and described later. The AF unit 8 thus configured enables detection of a focus state of the image-pickup optical system (that is, focus detection) by a phase difference detection method. The secondary image-forming lens 8b is configured to form paired object images of objects respectively included in plural areas of an image pickup frame. In other words, plural focus detection areas are disposed in the image pickup frame.

Reference numeral 12 denotes a liquid crystal monitor that displays the image signals (live view images and captured images) and various information.

In the interchangeable lens 3, reference numeral 13 denotes a focus motor that is a driving source to move the focus lens 3a in an optical axis direction. Reference numeral 14 denotes a lead screw that is rotated by the focus motor 13. The lead screw 14 engages with a rack 19 attached to the focus lens 3a (actually attached to a holding member holding the focus lens 3a). Therefore, rotation of the lead screw 14 by the focus motor 13 moves the rack 19 and the focus lens 3a in the optical axis direction by engagement of the lead screw 14 and the rack 19.

A pulse plate 16 integrally rotatable with the lead screw 14 is attached to a tip of the lead screw 14. A photo coupler 15 including a light-emitting element and a light-receiving element that are arranged so as to sandwich part of the pulse plate 16 is disposed in the interchangeable lens 3. The photo coupler 15 produces a pulse signal in response to each reception of light from the light-emitting element at the light-receiving element with rotation of the pulse plate 16. This pulse signal is input to a focus controller 24 described later (shown in FIG. 4) that counts a number of the input pulse signals to detect a movement amount (or a position) of the focus lens 3a.

Reference numeral 18 denotes an aperture stop driving part that includes an aperture stop driver 25 described later (shown in FIG. 4) and drives the aperture stop 17 in its opening and closing directions.

FIG. 4 shows an electrical configuration of the above-described digital SLR camera system. Reference numeral 20 denotes a microcomputer (hereinafter referred to as "an MPU") serving as a main controller that controls operation of the camera body 1 and the entire camera system. Reference numeral 21 denotes a memory controller that controls operation of the image sensor 6 and performs control relating to image data. Reference numeral 22 denotes an EEPROM serving as a memory that stores data to be used for various control processes.

Reference numeral 23 denotes a lens controller provided in the interchangeable lens 3. The lens controller 23 controls the focus controller 24 and the aperture stop driver 25 in the interchangeable lens 3 in response to control signals sent from the MPU 20 through the mount 2.

The focus controller 24 receives information showing a target movement amount of the focus lens 3a from the lens controller 23 and the pulse signals (that is, information on an actual movement amount of the focus lens 3a) from the photo coupler 15. The focus controller 24 drives the focus motor 13 to move the focus lens 3a on the basis of the information on the target movement amount and the information on the actual movement amount. The aperture stop driver 25 drives the aperture stop 17 in response to an aperture stop drive signal from the lens controller 23.

The focus detector 26 in the camera body 1 controls charge accumulation of the area sensor 8c provided in the AF unit 8 and charge reading therefrom, and outputs the paired image signals obtained in each of the focus detection areas to the MPU 20. The MPU 20 performs correlation calculation on the input paired image signals to calculate a phase difference therebetween. In addition, the MPU 20 calculates, from the phase difference, a defocus amount showing a focus state of the image-pickup optical system. Then, the MPU 20 calculates an in-focus position of the focus lens 3a based on the calculated defocus amount and optical data (such as a focal length of the image-pickup optical system and a focus sensitivity of the focus lens 3a) received from the interchangeable lens 3 (lens controller 23). The in-focus position, which is a first in-focus position, obtained by the phase difference detection method is hereinafter referred to as "a phase difference in-focus position". The MPU 20 sends information on the phase difference in-focus position to the lens controller 23.

The AF unit 8, the focus detector 26 and the MPU 20 constitute a first detector.

The lens controller 23 calculates the target movement amount of the focus lens 3a to move the focus lens 3a from a current position to the phase difference in-focus position, and then outputs information on the target movement amount to the focus controller 24. The focus controller 24 drives, according to the target movement amount, the focus motor 13 to move the focus lens 3a to the phase difference in-focus position, as described above. Thus, phase difference AF (auto focus) including the focus detection by the phase difference detection method and the movement of the focus lens 3a for focusing is performed.

In the camera body 1, reference numeral 27 denotes a motor driver. The motor driver 27 controls a mirror motor (not shown) that drives the main mirror 4 and a charge motor (not shown) that charges the shutter 5.

Reference numeral 28 denotes a shutter driver that controls supply of electric power to a coil of an electric magnet (not shown) which can hold the shutter 5 in its charged state.

Reference numeral 29 denotes a DC/DC converter that converts a voltage of a power supply (battery) 30 into voltages necessary for the above-described respective parts (circuits or the like) in the camera body 1 and the interchangeable lens 3. The power supply 30 is detachably attachable to the camera body 1.

Reference numeral 31 denotes a release button that is operated by the user to start an image pickup operation of the camera system. A half-press operation (first stroke operation) of the release button 31 turns a first switch SW1 on, which starts image pickup preparation operations such as auto exposure (AE) and AF. Moreover, a full-press operation (second stroke operation) of the release button 31 turns a second switch SW2 on, which starts the exposure of the image sensor 6 to produce a recording image. The on signals from the first and second switches SW1 and SW2 are input to the MPU 20.

Reference numeral 32 denotes a mode button; a user's operation of the mode button 32 with an electronic dial 33 described later enables selection of image pickup modes in the camera body 1.

An up/down counter in the MPU 20 counts click signals output from the electronic dial 33 in response to its rotational operation amount by the user. The MPU 20 selects various numerical values and data according to the counted value.

Reference numeral 34 denotes a multi-control button serving as an operation inputting part and including eight buttons arranged at upper, lower, right and left positions and a position thereamong. User's operations of the eight buttons enable selection or setting of a target focus detection area to obtain an in-focus state and details of the image pickup modes.

Reference numeral 35 denotes an AF button;

a user's operation of the AF button 35 switches on and off of the AF.

Reference numeral 36 denotes a power button; a user's operation of the power button turns power on/off of the camera body 1 (and the interchangeable lens 3).

Reference numeral 40 denotes a CDS (Correlated Double Sampling)/AGC (Automatic Gain Control) circuit that performs sample holding and gain control on the image pickup signal output from the image sensor 6. Reference numeral 41 denotes an A/D converter that converts analog output signals from the CDS/AGC circuit 40 into digital signals. Reference numeral 42 denotes a TG (timing generation) circuit that supplies a drive timing signal to the image sensor 6, supplies a sample holding timing signal to the CDS/AGC circuit 40 and supplies a sample clock signal to the A/D converter 41.

The memory controller 21 detects an in-focus position of the focus lens 3a by a contrast detection method by using the image pickup signal (or the image signal produced from the image pickup signal) output from the image sensor 6, the CDS/AGC circuit 40 and the A/D converter 41. The in-focus position, which is a second in-focus position, detected by the contrast detection method is hereinafter referred to as "a contrast in-focus position". The memory controller 21 serves as a second detector. The MPU 20 performs focus calibration that corrects the phase difference in-focus position using a difference between the contrast in-focus position and the phase difference in-focus position. The MPU 20 serves as a corrector.

Reference numeral 43 denotes an SDRAM serving as a memory. The SDRAM 43 temporarily stores digital data such as images converted by the A/D converter 41. Reference numeral 44 denotes an image processor that performs various processes such as Y/C (brightness signal/color-difference signal) separation, white balance correction and γ correction on the image pickup signal (digital signal) output from the A/D converter 41 to produce image data (image signals) for the live-view display and for recording.

Moreover, the memory controller 21 can acquire photometry information of the object from the image data produced by the image processor 44; such photometry is so-called image pickup surface AE.

Reference numeral 45 denotes an image compression/decompression circuit that compresses the image data according to a predetermined form such as JPEG and decompresses the compressed image data.

Reference numeral 46 denotes a D/A convertor that converts the image data stored in the SDRAM 43 and a recording medium 48 into an analogue image signal in order to display the image data in the liquid crystal monitor 12. Reference numeral 47 denotes an I/F (interface) for the recording medium 48.

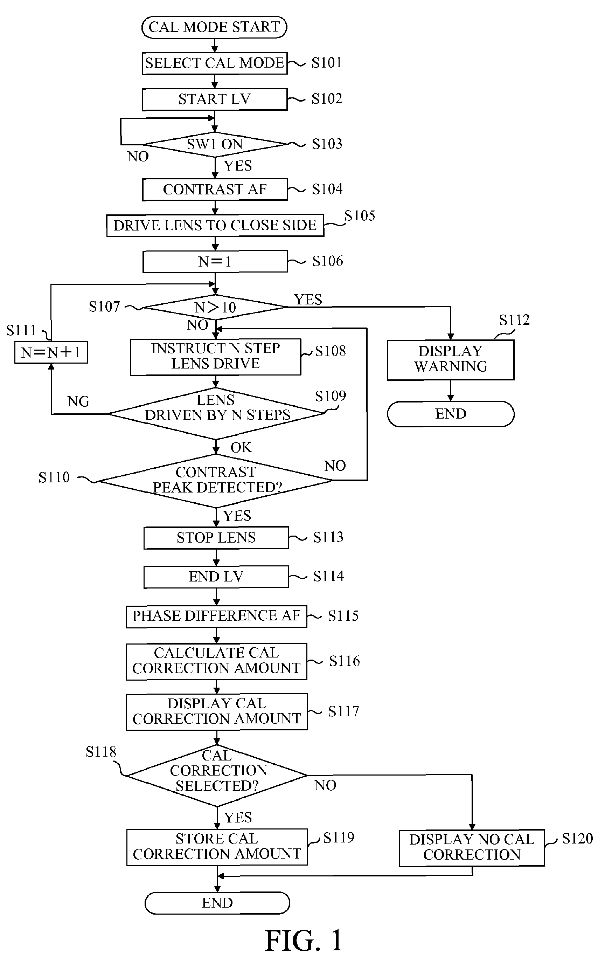

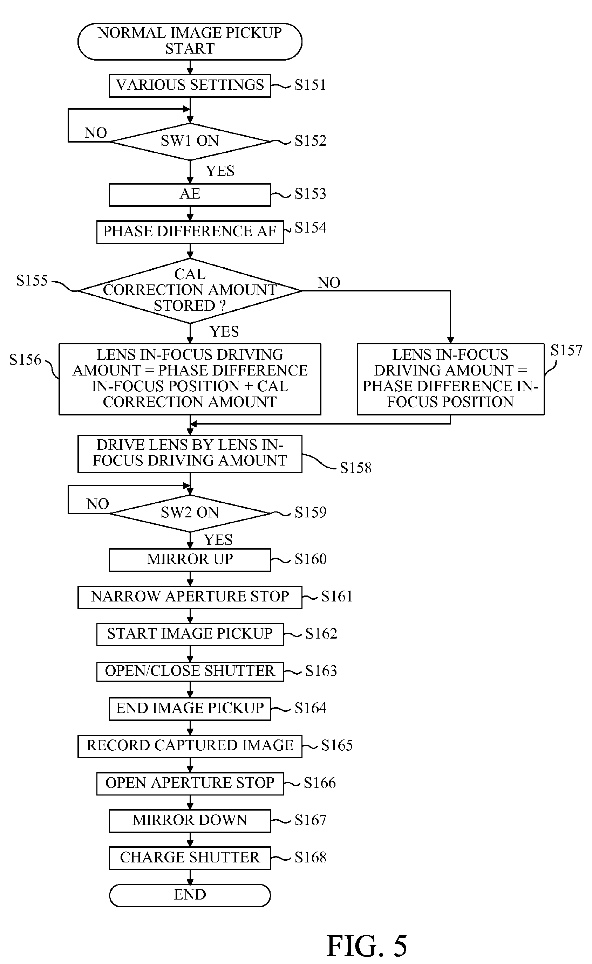

Next, description will be made of operations of the digital SLR camera system of this embodiment with reference to flowcharts shown in FIGS. 1 and 5. The flowchart of FIG. 1 shows operations in a calibration mode in which the focus calibration is performed. The MPU 20 and the memory controller 21 each constituted by a computer perform the operations shown in FIGS. 1 and 5 according to computer programs.

At step S101, when detecting selection of the calibration mode by the user's operations of the mode button 32 and the electronic dial 33, the MPU 20 proceeds to step S102.

At step S102, the MPU 20 starts the live-view (LV) display to perform the focus calibration.

Specifically, the MPU 20 controls the mirror motor through the motor driver 27 to rotate the main mirror 4 and the sub mirror 7 to the up position so as to cause the mirrors 4 and 7 to retract outside the image pickup optical path. Moreover, the MPU 20 drives the charge motor through the shutter driver 28 so as to fully open the shutter 5 as shown in FIG.3. Then, the memory controller 21 causes the image sensor 6 to start photoelectric conversion (charge accumulation and charge reading), and causes the liquid crystal monitor 12 to display a live-view image that is video produced by the image processor 44 using the image pickup signal read from the image sensor 6. The user searches for a target object for the focus calibration while looking at the live-view image, and then places the camera such that the target object is located at a center of the liquid crystal monitor 12 (that is, a center of the image pickup frame).

In this embodiment, a focus detection area to perform the focus calibration is set to a central focus detection area in the image pickup frame, so that the target object is disposed at the center of the image pickup frame. However, the focus calibration may be performed at any focus detection area in the image pickup frame, and the target object may be disposed in the focus detection area to perform the focus calibration.

Next, at step S103, the MPU 20 determines whether or not the first switch SW1 has been turned on by the user's half-press operation of the release button 31. If the first switch SW1 has been turned on, the MPU 20 sets the focus detection area where the focus calibration is performed and the target object, and then proceeds to step S104. If the first switch SW1 has not been turned on, the MPU 20 waits until the first switch SW1 is turned on.

At step S104, the memory controller 21 acquires plural images for detection of the contrast in-focus position by the contrast detection method. Specifically, the memory controller 21 moves, through the MPU 20, the focus lens 3a from, for example, an infinitely far side to a close side in steps of a first predetermined amount (in steps of M steps corresponding to M pulses from the photo coupler 15). And, the memory controller 21 temporarily stores plural images (hereinafter referred to as "contrast evaluation images") produced by using the image pickup signals obtained from the image sensor 6 at different focus lens positions in steps of the first predetermined amount in the SDRAM 43, together with these focus lens positions corresponding to the contrast evaluation images.

Next, the memory controller 21 detects, from the contrast evaluation images thus obtained, one contrast evaluation image (hereinafter referred to as "a peak image") whose contrast in its central focus detection area is maximum (peak). The MPU 20 sets the focus lens position (hereinafter referred to as "a peak position") corresponding to the peak image as the contrast in-focus position, and then moves the focus lens 3a to the contrast in-focus position.

Next, at step S105, the MPU 20 moves, through the lens controller 23, the focus lens 3a from the contrast in-focus position to the close side by a second predetermined amount. In order to accurately detect the peak position, it is necessary to perform contrast evaluation at the vicinity of the peak position and at positions on the infinitely far side and the close side with respect to the peak position. Thus, in order to move the focus lens 3a to these positions, it is desirable to set the second predetermined amount to a step amount about twice of 10 that is an upper limit of a driving step amount N set at step S107 described later.

Next, at step S106, the MPU 20 sets 1 to the driving step amount N in minute drive of the focus lens 3a. The driving step amount N actually corresponds to a pulse number N from the photo coupler 15 which shows a rotation amount of the focus motor 13. However, this embodiment treats the driving step amount N as showing the movement amount of the focus lens 3a.

Then, at step S107, the MPU 20 determines whether or not the set driving step amount N exceeds 10 that is its upper limit. If the set driving step amount N is equal to or below 10, the MPU 20 proceeds to step S108. If the set driving step amount N exceeds 10, the MPU 20 proceeds to step S112.

At step S108, the MPU 20 instructs (commands) the lens controller 23 to move the focus lens 3a by the driving step amount N to the infinitely far side. The lens controller 23 drives, in response to the instruction, the focus motor 13 through the focus controller 24 so as to move the focus lens 3a by the driving step amount N. Since N is at first equal to 1, the lens controller 23 drives the focus motor 13 so as to move the focus lens 3a by one step.

At step S109, the MPU 20 determines, through the focus controller 24 and the lens controller 23, whether or not the pulse number from the photo coupler 15 has reached N, that is, whether or not the actual movement amount of the focus lens 3a has reached N steps corresponding to the instructed driving step amount N. Since N is at first equal to 1, the MPU 20 determines whether or not the actual movement amount of the focus lens 3a has become one step. In this embodiment, if a difference between the actual movement amount of the focus lens 3a and the instructed driving step amount N is equal to or below a predetermined value (or within a predetermined range), the MPU 20 regards the actual movement amount of the focus lens 3a as having reached N steps corresponding to the instructed driving step amount N. If the actual movement amount of the focus lens 3a has reached N steps, the MPU 20 proceeds to step S110. If the actual movement amount of the focus lens 3a has not reached N steps correctly, the MPU 20 proceeds to step S111. The actual movement amount of the focus lens 3a has not reached N steps correctly when the focus lens 3a has not been moved at all or when the focus lens 3a has been moved but the difference between the actual movement amount and the instructed movement amount exceeds the predetermined value (or exceeds the predetermined range).

The N step movement of the focus lens 3a as instructed means that the interchangeable lens 3 currently attached to the camera body 1 has a function (driving capability) of moving the focus lens 3a by N steps with respect to the instructed driving step amount N from the MPU 20. On the other hand, non-N step movement (incorrect movement) of the focus lens 3a means that the interchangeable lens 3 currently attached to the camera body 1 is a lens type that originally does not support such a movement instruction or has no function of moving the focus lens 3a by N steps with respect to the instructed driving step amount N due to deterioration of its focus lens driving capability caused by long-term use or the like.

At step S110, the memory controller 21 acquires the contrast evaluation image at the focus lens position after the N step movement. Then, the memory controller 21 determines whether or not it has acquired the peak image, that is, whether or not it has detected the peak position of the focus lens 3a where the contrast becomes peak. If having detected the peak position, the memory controller 21 proceeds to step S113. If having not detected the peak position, the memory controller 21 returns to step S108 to repeat steps S108 to S110 until it detects the peak position. Since at least three contrast images are required for the peak position detection, the memory controller 21 repeats steps S108 to S110 at least three times.

The peak position obtained at this step is a peak position that can be obtained by the N step movement of the focus lens 3a performed as instructed from the MPU 20 in the interchangeable lens 3, and thus the peak position can be used for the focus calibration of the interchangeable lens 3. This peak position is also one of the contrast in-focus positions obtained by the contrast detection method.

At step S111, the MPU 20 increases, in response to the determination that the N step movement of the focus lens 3a has not been performed at step S109, the driving step amount N by 1 to set it to N+1, and then returns to step S107. When N is 1, N+1 becomes 2 (=1+1). Thus, the MPU 20 drives the focus lens 3a at step S108 with increase of N in steps of 1 at step S111 until determining that the N step movement of the focus lens 3a has been performed at step S109.

Although this embodiment describes the case of increasing the driving step amount N in steps of 1 at step S111, the driving step amount N may be increased in steps of 2 or more. Moreover, although this embodiment describes the case of moving the focus lens 3a from the close side to the infinitely far side at steps S105 to S109, the focus lens 3a may be moved from the infinitely far side to the close side. In this case, the focus lens 3a may be moved to the infinitely far side by the second predetermined amount at step S105.

At step S112, the MPU 20 regards the interchangeable lens 3 as having any abnormality because the N step movement of the focus lens 3a is not performed even though the driving step amount N instructed at step S107 exceeds 10. Then, the MPU 20 outputs information (warning) showing that it is impossible to perform the focus calibration, that is, no correction of the phase difference in-focus position is made by the focus calibration. Specifically, the MPU 20 displays the warning on the liquid crystal monitor 12. Thereafter, the MPU20 ends the calibration mode. The upper limit of the driving step amount N set at step S107 may be other than 10. Moreover, the warning may be output by sound.

At step S113, the MPU 20 that has detected the peak position sends, to the lens controller 23, an instruction to stop the drive of the focus lens 3a.

Next, at step S114, the MPU 20 ends the live-view display. Then, the MPU 20 closes the shutter 5 through the shutter driver 28, and rotates the main mirror 4 and the sub mirror 7 to the down position as shown in FIG. 2 through the motor driver 27.

Next, at step S115, the MPU 20 performs the focus detection by the phase difference detection method and calculates the phase difference in-focus position based on the focus detection result.

Next, at step S116, the MPU 20 calculates a difference between the peak position (contrast in-focus position) obtained at step S110 and the phase difference in-focus position obtained at step S115. This difference is set to a correction amount (hereinafter referred to as "a CAL correction amount") for the phase difference in-focus position.

Thus, in this embodiment, the MPU 20 outputs, to the interchangeable lens 3, the instruction to move the focus lens 3a by the predetermined movement amount (driving step amount N) that is the target movement amount. In addition, the MPU 20 receives (acquires), from the interchangeable lens 3, the information on the actual movement amount of the focus lens 3a (that is, the pulse number N from the photo coupler 15) in response to the above-mentioned instruction. Then, when the actual movement amount does not coincide with the predetermined movement amount, in other words, when the difference between the predetermined movement amount and the actual movement amount exceeds the predetermined value (or exceeds the predetermined range), the MPU 20 outputs again the instruction for the interchangeable lens 3 to move the focus lens 3a with change of the predetermined movement amount (that is, with increase of N). Thus, the MPU 20 calculates the CAL correction amount by using the contrast in-focus position when the actual movement amount coincides with the predetermined movement amount, in other words, when the difference between the predetermined movement amount and the actual movement amount is equal to or below the predetermined value (or within the predetermined range).

Next, at step S117, the MPU 20 displays the CAL correction amount on the liquid crystal monitor 12.

In addition, at step S118, the MPU 20 waits for a user's operation for selecting whether or not to correct the phase difference in-focus position by using the CAL correction amount displayed on the liquid crystal monitor 12. That is, the MPU 20 waits for a user's operation for selecting whether or not to employ this CAL correction amount for the focus calibration. The user's operation is made in, for example, the multi-control button (selector) 34. If the operation for selecting the correction is made, the MPU 20 proceeds to step S119. If the operation for selecting no correction is made, the MPU 20 proceeds to step S120.

At step S119, the MPU 20 stores the CAL correction amount in the EEPROM 22.

Next, at step S120, the MPU 20 displays, on the liquid crystal monitor 12, that no correction of the phase difference in-focus position is made, that is, no focus calibration is performed, and then ends the calibration mode.

FIG. 5 is a flowchart showing fundamental operations of the camera system of this embodiment. At step S151, the MPU 20 performs various settings of the camera system according to user's operations of various buttons. For example, the MPU 20 sets the image pickup modes in response to a user's operation of the mode button 32, and changes a shutter speed and an aperture value in response to user's operations of the electronic dial 33.

At step S152, the MPU 20 determines whether or not a user's operation of the release button 31 has been made. If the user's half-press operation of the release button 31 has been made and thereby the first switch SW1 has been turned on, the MPU 20 proceeds to step S153. If the first switch SW1 has not been turned on, the MPU 20 waits for turning-on thereof.

At step S153, the MPU 20 causes an AE sensor (not shown) to perform photometry for the object. Then, the MPU 20 sets the shutter speed and the aperture value in the auto exposure (AE) on the basis of the photometry result.

Next, at step S154, the MPU 20 performs the focus detection by the phase difference AF and calculates the phase difference in-focus position.

Then, at step S155, the MPU 20 determines whether or not the CAL correction amount is stored in the EEPROM 22. If the CAL correction amount is stored, the MPU 22 proceeds to step S156. If the CAL correction amount is not stored, the MPU 22 proceeds to step S157.

At step S156, the MPU 20 adds the CAL correction amount to the phase difference in-focus position calculated at step S154 to correct the phase difference in-focus position. Then, the MPU 20 calculates a movement amount (hereinafter referred to as "a lens in-focus driving amount") of the focus lens 3a to the corrected phase difference in-focus position. Thereafter, the MPU 20 proceeds to step S158.

On the other hand, at step S157, the MPU 20 calculates the target movement amount (also referred to as "the lens in-focus driving amount") of the focus lens 3a to the phase difference in-focus position calculated at step S154. Then, the MPU 20 proceeds to step S158.

At step S158, the MPU 20 sends information on the lens in-focus driving amount to the focus controller 24 through the lens controller 23 to cause the focus controller 24 to drive the focus motor 13 by a rotation amount corresponding to the lens in-focus driving amount. Thereby, the focus lens 3a is moved to the phase difference in-focus position calculated at step S154 or corrected at step S156.

At step S159, the MPU 20 determines whether or not the user's full-press operation of the release button 31 has been made. If the full-press operation has been made and thereby the second switch SW2 has been turned on, the MPU 20 proceeds to step S160. If the second switch SW2 has not been turned on, the MPU 20 waits for turning-on thereof.

At step S160, the MPU 20 causes the motor driver 27 to drive the mirror motor so as to rotate the main mirror 4 and the sub mirror 7 to the up position.

Furthermore, at step S161, the MPU20 causes, through the lens controller 23, the aperture stop driver 25 to drive the aperture stop 17 according to the aperture value calculated based on a result of the AE or selected by the user.

At step S162, the memory controller 21 starts the charge accumulation of the image sensor 6 for producing captured image data (recording image).

At step S163, the MPU 20 causes the shutter driver 28 to drive (open and close) the shutter 5 according to the shutter speed calculated based on the result of the AE or selected by the user.

At step S164, the memory controller 21 reads the charge (image pickup signal) accumulated by the image sensor 6, and then temporarily stores the image pickup signal in the SDRAM 43.

Next, at step S165, the memory controller 21 causes the image processor 44 to perform the above-described image processes such as the white balance correction, the γ correction and edge reinforcement on the image pickup signal temporarily stored in the SDRAM 43 to produce the captured image data. Then, the memory controller 21 causes the image compression/decompression circuit 45 to compress the captured image data according to the predetermined form such as JPEG, and then causes the recording medium 48 to store the compressed captured image data.

Next, at step S166, the MPU 20 causes the aperture stop driver 25 through the lens controller 23 to drive the aperture stop 17 to a full open position. This is because in this embodiment the focus detection in the phase difference AF is performed in a state where the aperture stop 17 is fully opened. If the focus detection can be performed in a state where the aperture stop 17 is narrowed, it is not necessary to fully open the aperture stop 17.

Next, at step S167, the MPU 20 causes the motor driver 27 to drive the mirror motor so as to rotate the main mirror 4 and the sub mirror 7, which are retracted at the up position, to the down position.

Next, at step S168, the MPU 20 causes, in order to prepare for next image pickup, the motor driver 27 to drive the charge motor so as to charge the shutter 5, and then ends the fundamental operation.

As described above, this embodiment can change the driving step amount of the focus lens 3a to detect the contrast in-focus position used for calculation of the CAL correction amount according to the focus lens driving capability of the interchangeable lens 3. Therefore, this embodiment can perform good calibration of the phase difference in-focus position (that is, good focus calibration), regardless of types or focus lens driving capability deterioration of the interchangeable lens 3 attached to the camera body 1.

[Embodiment 2]

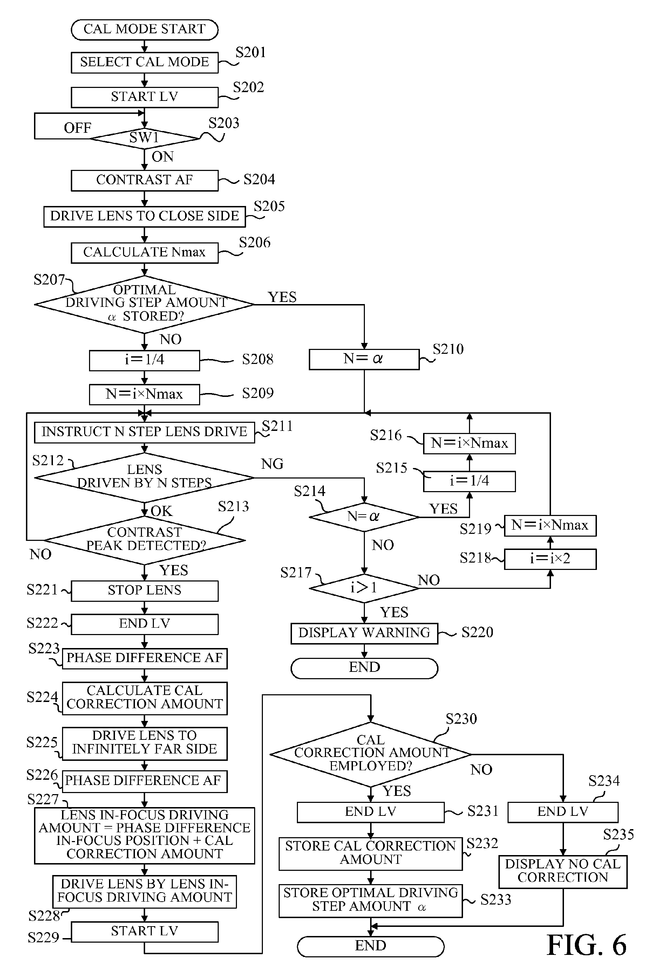

FIG. 6 is a flowchart showing operations performed in a calibration mode of a digital SLR camera system including a digital SLR camera (camera body) that is a second embodiment (Embodiment 2) of the present invention and an interchangeable lens. The camera body and the interchangeable lens have same configurations as those in Embodiment 1, and constituent components in this embodiment identical to those in Embodiment 1 are denoted by same reference numerals as those in Embodiment 1. An MPU 20 and a memory controller 21 each constituted by a computer perform operations shown in FIG. 6 according to a computer program.

At step S201, when detecting selection of the calibration mode by user's operations of a mode button 32 and an electronic dial 33, the MPU 20 proceeds to step S202.

At step S202, the MPU 20 starts live-view (LV) display to perform the focus calibration.

Next, at step S203, the MPU 20 determines whether or not a first switch SW1 has been turned on by a user's half-press operation of a release button 31. If the first switch SW1 has been turned on, the MPU 20 sets a focus detection area where the focus calibration is performed and a target object, and then proceeds to step S204. If the first switch SW1 has not been turned on, the MPU 20 waits until the first switch SW1 is turned on.

At step S204, the memory controller 21 acquires plural contrast evaluation images for detection of a contrast in-focus position by a contrast detection method while moving a focus lens 3a from, for example, an infinitely far side to a close side in steps of a first predetermined amount. The memory controller 21 detects, from the contrast evaluation images thus obtained, a peak image that is one contrast evaluation image whose contrast in its central focus detection area is maximum (peak). The MPU 20 sets a focus lens position (hereinafter referred to as "a peak position") corresponding to the peak image as the contrast in-focus position, and then moves the focus lens 3a to the contrast in-focus position.

Next, at step S205, the MPU 20 moves the focus lens 3a from the contrast in-focus position to the close side by a second predetermined amount. It is desirable to set the second predetermined amount to a step amount about twice of Nmax that is a maximum value of a driving step amount N set at step S206 described later.

Next, at step S206, the MPU 20 calculates the maximum value Nmax of the driving step amount N of the focus lens 3a. In this embodiment, the maximum vale Nmax is calculated by the following expression (1).

$$Nmax=FNo\times\varepsilon/\beta \quad ...(1)$$

where FNo represents a fully-opened aperture value of the interchangeable lens 3 (image-pickup optical system), ε represents a permissible circle of confusion, and β represents a focus position movement amount for each one step movement of the focus lens 3a.

For example, when FNo is 2.8, ε is 0.02mm and β is 0.007mm,

$$Nmax=2.8\times0.02/0.007=8(steps)$$

The maximum value Nmax may be calculated by other expressions than the expression (1).

Next, at step S207, the MPU 20 determines whether or not an optimal driving step amount α is stored in an EEPROM 22 provided in the camera body 1. This determination is made to determine whether or not information on the interchangeable lens 3, which is received by the MPU 20 from the interchangeable lens 3 attached to the camera body 1, is identical to data stored in the EEPROM 22; the information on the interchangeable lens 3 includes a type (model), a focal length, an F-number and an identification number of the interchangeable lens 3. If the driving step amount α is stored, the MPU 20 proceeds to step S210. If the driving step amount α is not stored, the MPU 2 proceeds to step S208.

At step S208, the MPU 20 sets 1/4 to a constant i.

Next, at step S209, the MPU 20 calculates the driving step amount N. Since Nmax is 8(steps) as calculated at step S206,

$$N=i\times Nmax$$
$$=1/4\times8$$
$$=2(steps).$$

At step S210, the MPU 20 sets the optimal driving step amount α stored in the EEPROM 22 to the driving step amount N. The optimal driving step amount α stored in the EEPROM 22 shows that the focus calibration has already been performed in the calibration mode of this camera body 1. Thus, in order to set the calibration mode again, the MPU 20 first performs minute drive of the focus lens 3a with the optimal driving step amount α stored in the previous calibration mode.

Next, at step S211, the MPU 20 instructs (commands) a lens controller 23 to drive the focus lens 3a by the driving step amount N to the infinitely far side. The lens controller 23 drives, in response to the instruction, a focus motor 13 through a focus controller 24 so as to move the focus lens 3a by the driving step amount N. In this step, the lens controller 23 moves the focus lens 3a such that N becomes 2 or α.

At step S212, the MPU 20 determines, through the focus controller 24 and the lens controller 23, whether or not a pulse number from a photo coupler 15 has reached N, that is, whether or not an actual movement amount of the focus lens 3a has reached N steps corresponding to the instructed driving step amount N. In this embodiment, if a difference between the actual movement amount of the focus lens 3a and the instructed driving step amount N is equal to or below a predetermined value (or within a predetermined range), the MPU 20 regards the actual movement amount of the focus lens 3a as having reached N steps corresponding to the instructed driving step amount N. If the actual movement amount of the focus lens 3a has reached N steps (2 or α steps), the MPU 20 proceeds to step S213. If the actual movement amount of the focus lens 3a has not reached N steps correctly, the MPU 20 proceeds to step S214. The actual movement amount of the focus lens 3a has not reached N steps correctly when the focus lens 3a has not been moved at all or when the focus lens 3a has been moved but the difference between the actual movement amount thereof and the instructed movement amount exceeds the predetermined value (or exceeds the predetermined range).

At step S213, the memory controller 21 acquires the contrast evaluation image at the focus lens position after the N (2 or α) step movement. Then, the memory controller 21 determines whether or not it has acquired the peak image, that is, whether or not it has detected the peak position of the focus lens 3a where the contrast becomes peak. If having detected the peak position, the memory controller 21 proceeds to step S221. If having not detected the peak position, the memory controller 21 returns to step S211 to repeat steps S211 to S213 until it detects the peak position. Since at least three contrast images are required for the peak position detection, the memory controller 21 repeats steps S211 to S213 at least three times.

At step S214, the MPU 20 determines, in response to the determination that the N (2 or $\alpha$) step movement of the focus lens 3a has not been performed at step S212, whether or not the driving step amount N is set to $\alpha$. If N is set to $\alpha$, the MPU 20 proceeds to step S215. If N is not set to $\alpha$, the MPU 20 proceeds to step S217.

At step S215, the MPU 20 first sets, in response to the determination that the N step movement is set to $\alpha$, 1/4 to the constant i in order to perform the minute drive of the focus lens 3a with change of the driving step amount N.

Next, at step S216, the MPU 20 calculates the driving step amount N. Since Nmax is 8(steps) as calculated at step S206,

$$N=i \times Nmax$$
$$=1/4 \times 8$$
$$=2(steps).$$

At steps S215 and S216, the MPU 20 performs same processes as the processes (steps S208 and S209) performed when the optimal driving step amount $\alpha$ is not stored.

At step S217, the MPU 20 determines, in response to the determination that the N step movement is not set to $\alpha$, whether or not the constant i is larger than 1. If the constant i is not larger than 1, the MPU 20 proceeds to step S218. If the constant i is larger than 1, the MPU 20 proceeds to step S220.

At step S218, the MPU 20 sets the constant i to ix2 as follows in order to change the driving step amount N.

$$i=1/4 \times 2$$
$$=1/2.$$

Next, at step S219, the MPU 20 calculates the driving step amount N again as follows, and then returns to step S211.

$$N=i \times Nmax$$
$$=1/2 \times 8$$
$$=4(steps).$$

At step S220, the MPU 20 displays (informs) warning showing that it is impossible to perform the focus calibration. This is because the driving step amount N calculated with the constant i larger than 1 exceeds the maximum value Nmax, which makes it impossible to accurately perform the peak position detection. Thereafter, the MPU 20 ends the calibration mode.

When the focus calibration is at first performed by the processes at steps S208, S217 and S218, the MPU 20 changes, with respect to Nmax, the driving step amount N first in steps of 1/4 step, next in steps of 1/2 step and finally in steps of one step. These step sizes are merely examples, so that other step sizes may be employed as long as capable of performing accurate peak position detection.

At step S221, the MPU 20 that has detected the peak position sends, to the lens controller 23, an instruction to stop the drive of the focus lens 3a. The lens controller 23 stops the drive of the focus lens 3a in response to this stop instruction.

Next, at step S222, the MPU 20 ends the live-view display. Then, the MPU 20 closes a shutter 5 through a shutter driver 28, and rotates a main mirror 4 and a sub mirror 7 to a down position through a motor driver 27.

Next, at step S223, the MPU 20 performs focus detection by a phase difference detection method and calculates a phase difference in-focus position based on the focus detection result.

Next, at step S224, the MPU 20 calculates a difference between the peak position (contrast in-focus position) obtained at step S213 and the phase difference in-focus position obtained at step S223. This difference is set to a CAL correction amount that is a correction amount for the phase difference in-focus position.

Thus, in this embodiment, the MPU 20 outputs the instruction for the interchangeable lens 3 to move the focus lens 3a by the predetermined movement amount (driving step amount N) that is a target movement amount. In addition, the MPU 20 receives (acquires), from the interchangeable lens 3, the information on the actual movement amount (pulse number N from the photo coupler 15) of the focus lens 3a in response to the instruction. Then, the MPU 20 outputs again, to the interchangeable lens 3, the instruction to move the focus lens 3a with change of the predetermined movement amount when the actual movement amount does not coincide with the predetermined movement amount, that is, when the difference between the predetermined movement amount and the actual movement amount exceeds the predetermined value (or exceeds the predetermined range). Thus, the MPU 20 calculates the CAL correction amount by using the contrast in-focus position when the actual movement amount coincides with the predetermined movement amount, that is, when the difference between the predetermined movement amount and the actual movement amount is equal to or below the predetermined value (or within the predetermined range).

Next, at step S225, the MPU 20 moves, through the lens controller 23, the focus lens 3a to the infinitely far side by a third predetermined amount from the position where the focus lens 3a has been stopped at step S221. At this step, the focus lens 3a may be moved to the close side.

Next, at step S226, the MPU 20 performs the focus detection by the phase difference detection method and calculates the phase difference in-focus position based on the focus detection result.

Then, at step S227, the MPU 20 adds the CAL correction amount to the phase difference in-focus position calculated at step S226 to correct the phase difference in-focus position. Furthermore, the MPU 20 calculates a movement amount (lens in-focus driving amount) of the focus lens 3a to the corrected phase difference in-focus position. Thereafter, the MPU 20 proceeds to step S228.

At step S228, the MPU 20 sends information on the lens in-focus driving amount to the focus controller 24 through the lens controller 23 to cause the focus controller 24 to drive the focus motor 13 by a rotation amount corresponding to the lens in-focus driving amount. Thereby, the focus lens 3a is moved to the corrected phase difference in-focus position.

Next, at step S229, the MPU 20 starts the live-view (LV) display on a liquid crystal display 12.

In addition, at step S230, the MPU 20 determines whether or not a user having determined that the camera is focused on an object through the LV image displayed on the liquid crystal display 12 has performed an operation through a multi-control button 34 for selecting "OK". That is, the MPU 20 determines whether or not the user has decided to employ the CAL correction amount. At this step, the user can operate the electronic dial 33 or the multi-control button 34 to enlarge part of the displayed LV image, which makes it easy for the user to strictly confirm whether or not an in-focus state is obtained. If "OK" is selected, the MPU 20 proceeds to step S231. If "OK" is not selected (that is, the user has operated the multi-control button 34 to select "NG"), the MPU 20 proceeds to step S234.

Although this embodiment displays the LV image on the liquid crystal display 12 in order to cause the user to determine whether or not to employ the CAL correction amount, a test captured image data obtained by test image pickup may be displayed on the liquid crystal display 12 in order to cause the user to determine whether or not to employ the CAL correction amount.

At step S231, the MPU 20 ends the live-view display.

Next, at step S232, the MPU 20 stores the CAL correction amount calculated at step S224 in the EEPROM 22.

In addition, at step S233, the MPU 20 stores the driving step amount N obtained when the peak position could be detected at step S213 as an optimal driving step amount $\alpha$ in the EEPROM 22. The MPU 20 also stores, together with the optimal driving step amount $\alpha$ (in other words, in relation to the optimal driving step amount $\alpha$), information on the interchangeable lens 3 attached to the camera body 1 including a type (model), a focal length, an F-number and an identification number thereof. Then, the MPU 20 ends the calibration mode.

On the other hand, at step S234, the MPU 20 ends the Live-view display.

Next, at step S235, the MPU 20 displays, on the liquid crystal monitor 12, that no correction of the phase difference in-focus position is made, that is, no focus calibration is performed, and then ends the calibration mode.

As described above, this embodiment can prevent the driving step amount of the focus lens 3a in the peak position detection (contrast in-focus position detection) by the contrast detection method from exceeding the maximum value that enables accurate peak position detection.

Moreover, this embodiment can change, according to focus lens driving capability of the interchangeable lens 3, the driving step amount of the focus lens 3a to detect the contrast in-focus position that is used to calculate the CAL correction amount. Therefore, this embodiment can perform good calibration of the phase difference in-focus position (that is, good focus calibration), regardless of types, focus lens driving capability deterioration or the like of the interchangeable lens 3 attached to the camera body 1.

Moreover, this embodiment stores, when performing the focus calibration, the optimal driving step amount together with the information on the interchangeable lens 3. Thus, this embodiment can use the stored optimal driving step amount when performing the focus calibration on the same interchangeable lens again.

In addition, this embodiment enables the user to decide whether or not to employ the calculated CAL correction amount.

Although each of the above embodiments has described about the digital SLR camera as the image pickup apparatus and the interchangeable lens as the optical apparatus, the image pickup apparatus may be a digital still camera or a video camera other than the digital SLR camera, and the optical apparatus may be an optical apparatus whose image-pickup optical system is constituted optical elements other than lenses.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

The image pickup apparatus electrically converts an object image to produce an image signal and includes a first detector (8, 20, 26) detecting a first in-focus position by a phase difference detection method, a second detector (21) detecting a second in-focus position by a contrast detection method using the image signal, and a corrector (20) correcting, based on a difference between the first and second in-focus positions, the first in-focus position for image pickup. A controller (20) instructs the optical apparatus to move the focus lens by a predetermined movement amount when the second in-focus position is detected, receives, from the optical apparatus, information on an actual movement amount of the focus lens in response to the instruction, and instructs again the optical apparatus to move the focus lens with change of the predetermined movement amount when a difference between the predetermined and actual movement amounts exceeds a predetermined value.

**Claims**

1. An image pickup apparatus (1) to which an optical apparatus (3) including an image-pickup optical system (3a, 3b, 17) is detachably attachable, the image pickup apparatus comprising:

    an image pickup device (6, 40, 41) configured to electrically convert an object image formed by the image-pickup optical system to produce an image pickup signal;
    a first detector (8, 20, 26) configured to detect a first in-focus position by a phase difference detection method;
    a second detector (21) configured to detect a second in-focus position by a contrast detection method using the image pickup signal;
    a corrector (20) configured to correct, based on a difference between the first and second in-focus positions, the first in-focus position for image pickup; and
    a controller (20) configured to be capable of communicating with the optical apparatus and configured to control drive of a focus lens (3a) included in the image-pickup optical system, **characterized in that** the controller is configured to output, to the optical apparatus, an instruction to move the focus lens by a predetermined movement amount when detection of the second in-focus position is made, and configured to receive, from the optical apparatus, information on an actual movement amount of the focus lens in response to the instruction, and wherein the controller is configured to output again, when a difference between the predetermined movement amount and the actual movement amount exceeds a predetermined value, to the optical apparatus, the instruction to move the focus lens with change of the predetermined movement amount.

2. An image pickup apparatus (1) according to claim 1, wherein the corrector (20) is configured to correct the first in-focus position by using the second in-focus position detected by the contrast detection method when the difference between the predetermined movement amount and the actual movement amount is below the predetermined value.

3. An image pickup apparatus (1) according to claim 1 or 2, wherein the controller (20) is configured to output again, when the difference between the predetermined movement amount and the actual movement amount exceeds the predetermined value, to the optical apparatus (3), the instruction to move the focus lens with increase of the predetermined movement amount.

4. An image pickup apparatus (1) according to any one of claims 1 to 3, wherein the controller (20) is configured to output, when the difference between the predetermined movement amount changed to its upper limit and the actual movement amount exceeds the predetermined value, information showing that no correction of the first in-focus position is made.

5. An image pickup apparatus (1) according to any one of claims 1 to 4, further comprising a selector (34) configured to enable a user to select whether or not to cause the corrector to correct the first in-focus position for the image pickup.

6. An image pickup apparatus (1) according to any one of claims 1 to 5, further comprising a memory (22) configured to store the predetermined movement amount when the difference between that predetermined movement amount and the actual movement amount falls below the predetermined value.

7. A control method of an image pickup apparatus (1) to which an optical apparatus (3) including an image-pickup optical system is detachably attachable and which includes an image pickup device (6, 40, 41) configured to electrically convert an object image formed by the image-pickup optical system (3a, 3b, 17) to produce an image pickup signal, the control method comprising the steps of:

    detecting a first in-focus position by a phase difference detection method;
    detecting a second in-focus position by a contrast detection method using the image pickup signal;

correcting, based on a difference between the first and second in-focus positions, the first in-focus position for image pickup; and

controlling drive of a focus lens included in the image-pickup optical system with communication with the optical apparatus,

**characterized in that** the control method outputs, to the optical apparatus, an instruction to move the focus lens by a predetermined movement amount when detection of the second in-focus position is made, and receives, from the optical apparatus, information on an actual movement amount of the focus lens in response to the instruction, and

the control method outputs again, when a difference between the predetermined movement amount and the actual movement amount exceeds a predetermined value, to the optical apparatus, the instruction to move the focus lens with change of the predetermined movement amount.

CAL MODE START

SELECT CAL MODE — S101

START LV — S102

SW1 ON — S103
NO / YES

CONTRAST AF — S104

DRIVE LENS TO CLOSE SIDE — S105

$N=1$ — S106

S107 — $N>10$ — YES
NO

S111 — $N=N+1$

INSTRUCT N STEP LENS DRIVE — S108

DISPLAY WARNING — S112

END

LENS DRIVEN BY N STEPS — S109
NG / OK

CONTRAST PEAK DETECTED? — S110
NO / YES

STOP LENS — S113

END LV — S114

PHASE DIFFERENCE AF — S115

CALCULATE CAL CORRECTION AMOUNT — S116

DISPLAY CAL CORRECTION AMOUNT — S117

S118 — CAL CORRECTION SELECTED?
NO / YES

STORE CAL CORRECTION AMOUNT — S119

DISPLAY NO CAL CORRECTION — S120

END

FIG. 1

FIG. 2

EP 2 515 525 A2

FIG. 3

16

FIG. 4

NORMAL IMAGE PICKUP
START

VARIOUS SETTINGS ~ S151

NO ← SW1 ON ~ S152

YES

AE ~ S153

PHASE DIFFERENCE AF ~ S154

S155 ~ CAL CORRECTION AMOUNT STORED ? — NO

YES

S156 ~ LENS IN-FOCUS DRIVING AMOUNT = PHASE DIFFERENCE IN-FOCUS POSITION + CAL CORRECTION AMOUNT

LENS IN-FOCUS DRIVING AMOUNT = PHASE DIFFERENCE IN-FOCUS POSITION ~ S157

DRIVE LENS BY LENS IN-FOCUS DRIVING AMOUNT ~ S158

NO ← SW2 ON ~ S159

YES

MIRROR UP ~ S160

NARROW APERTURE STOP ~ S161

START IMAGE PICKUP ~ S162

OPEN/CLOSE SHUTTER ~ S163

END IMAGE PICKUP ~ S164

RECORD CAPTURED IMAGE ~ S165

OPEN APERTURE STOP ~ S166

MIRROR DOWN ~ S167

CHARGE SHUTTER ~ S168

END

FIG. 5

CAL MODE START

SELECT CAL MODE — S201

START LV — S202

OFF ◁ SW1 ▷ S203
ON

CONTRAST AF — S204

DRIVE LENS TO CLOSE SIDE — S205

CALCULATE Nmax — S206

S207 ◁ OPTIMAL DRIVING STEP AMOUNT $\alpha$ STORED? ▷ — YES

NO

$i = 1/4$ — S208

$N = i \times Nmax$ — S209

$N = \alpha$ — S210

INSTRUCT N STEP LENS DRIVE — S211

S212 ◁ LENS DRIVEN BY N STEPS ▷ NG

OK

S213 ◁ CONTRAST PEAK DETECTED? ▷

NO

YES

STOP LENS — S221

END LV — S222

S223 — PHASE DIFFERENCE AF

S224 — CALCULATE CAL CORRECTION AMOUNT

S225 — DRIVE LENS TO INFINITELY FAR SIDE

S226 — PHASE DIFFERENCE AF

S227 — LENS IN-FOCUS DRIVING AMOUNT = PHASE DIFFERENCE IN-FOCUS POSITION + CAL CORRECTION AMOUNT

DRIVE LENS BY LENS IN-FOCUS DRIVING AMOUNT

S228 —
S229 — START LV

S216 — $N = i \times Nmax$

S215 — $i = 1/4$

S214 ◁ $N = \alpha$ ▷ YES

NO

S219 — $N = i \times Nmax$

S218 — $i = i \times 2$

S217 ◁ $i > 1$ ▷ NO

YES

DISPLAY WARNING — S220

END

S230 ◁ CAL CORRECTION AMOUNT EMPLOYED? ▷ NO

YES

END LV — S231

STORE CAL CORRECTION AMOUNT — S232

STORE OPTIMAL DRIVING STEP AMOUNT $\alpha$ — S233

S234
END LV

S235
DISPLAY NO CAL CORRECTION

END

FIG. 6

**EP 2 515 525 A2**

## REFERENCES CITED IN THE DESCRIPTION

### Patent documents cited in the description

- JP 2003295047 A

- JP 2009139728 A